# EUROPÄISCHE PATENTSCHRIFT

(11) **EP 1 340 667 B1**
(45) Veröffentlichungstag und Bekanntmachung des Hinweises auf die Patenterteilung: **21.01.2009**
(21) Anmeldenummer: 03004490.3
(22) Anmeldetag: 28.02.2003
(51) Int. Cl.: B62B 3/06

(54) **Vorrichtung zum Aufnehmen und/oder Transportieren wenigstens eines Funktionsteils einer technischen Einrichtung**
Device for picking and carrying at least a functional element of a technical installation
Dispositif pour prendre et transporter au moins un élément fonctionnel d'une installation technique

(30) Priorität: 28.02.2002 DE 10209000
(43) Veröffentlichungstag der Anmeldung: 03.09.2003
(73) Patentinhaber: Jörg von Seggern Maschinenbau GmbH, 26133 Oldenburg (DE)
(72) Erfinder: Von Seggern, Jörg, 26133 Oldenburg (DE)
(74) Vertreter: Jabbusch, Matthias

(56) Entgegenhaltungen:
- EP-A- 0 439 837
- DE-A1- 4 401 257
- DE-A1- 19 753 411
- DE-U- 9 318 480
- GB-A- 2 190 896
- US-A- 4 388 037
- US-A- 5 256 238

## Beschreibung

Die Erfindung betrifft eine Vorrichtung zum Aufnehmen und/oder Transportieren wenigstens eines Werkzeuges einer technischen Einrichtung, insbesondere einer Einrichtung zum automatischen Versiegeln von Behältern, umfassend zumindestens ein Werkzeugaufnahmeelement und umfassend ein Fahrgestell, welches Räder aufweist und das Werkzeugaufnahmeelement trägt, wobei mindestens ein Rad am Fahrgestell höhenveränderbar aufgenommen ist.

Technische Einrichtungen weisen verschiedene Werkzeuge auf. Handelt es sich bei einer technischen Einrichtung um eine Einrichtung zum automatischen Versiegeln von Behältern, so weist diese Einrichtung wenigstens ein Werkzeug zum Versiegeln der Behälter auf. Bei diesem Werkzeug handelt es sich beispielsweise um ein Folienschweißgerät, das in ein Unterwerkzeug und in ein Oberwerkzeug unterteilt sein kann. Mit dem Unterwerkzeug werden zu versiegelnde Behälter gegen das Oberwerkzeug geführt, wobei zwischen den Behältern und dem Oberwerkzeug noch eine Folie angeordnet ist, mit der die Behälter versiegelt werden.

Für voneinander verschiedene Behälter ist das Verwenden voneinander verschiedener Werkzeuge erforderlich. Zum einen ist das Unterwerkzeug an die Form der Behälter angepaßt, zum anderen können mit dem Unterwerkzeug und mit dem Oberwerkzeug voneinander verschiedene Anzahlen von Behältern in einem Arbeitsgang versiegelt werden.

Für das somit notwendige Wechseln der Werkzeuge einer Einrichtung zum Versiegeln von Behältern sind bereits gattungsgemäße Vorrichtungen vorgeschlagen worden. Diese Vorrichtungen weisen jeweils ein Fahrgestell auf, mit dem sie z. B. in einer Halle, in der die Einrichtungen zum Versiegeln der Behälter angeordnet sind, verfahren werden können. Weiterhin weisen die bekannten Vorrichtungen jeweils zumindestens ein Werkzeugaufnahmeelement auf, mit dem ein Werkzeug von der Einrichtung zum Versiegeln der Behälter abgenommen werden kann bzw. der Einrichtung zum Versiegeln der Behälter zugeführt werden kann.

Einfache Hubwagen sind in der EP 0 439 837 A1, der GB 2190896 A, der DE 4401257 A1 und der DE 197 53 411 A1 gezeigt. Die DE 93 18 480 und die US 4,388,037 zeigen gleichfalls Hubwagen, diese weisen darüber hinaus aber noch Werkzeugaufnahmeelemente in Kranform mit pendelnden Haken auf.

Hallen, in denen Einrichtungen zum Versiegeln von Behältern aufgestellt sind, können einen unebenen Boden aufweisen. Daraus resultiert gegebenenfalls eine außerhalb der Horizontalen liegende Anordnung einer Einrichtung zum Versiegeln der Behälter. Die Einrichtung steht nicht ganz gerade, wodurch allerdings ihre Funktionsweise nicht beeinträchtigt ist. Erschwert ist aber, von einer derartigen Einrichtung ein Werkzeug abzunehmen bzw. dieses zuzuführen.

Dies ist darin begründet, daß die Werkzeuge für die Einrichtung zum Versiegeln von Behältern relativ schwer sind. Sie wiegen mehrere 100 kg, so daß sie sorgsam gehandhabt werden müssen, damit sie nicht beispielsweise durch ein Herausfallen aus der Einrichtung bzw. aus der Vorrichtung zum Aufnehmen und/oder Transportieren beschädigt werden. Regelmäßig wird eine gattungsgemäße Vorrichtung zum Aufnehmen und/oder Transportieren deshalb an eine Einrichtung zum Versiegeln der Behälter herangefahren, so daß das Werkzeug in einer Verschiebebewegung aus der Einrichtung zum Versiegeln der Behälter in die Vorrichtung zum Aufnehmen verlagert werden kann. Stehen die Einrichtung zum Versiegeln der Behälter und die Vorrichtung zum Aufnehmen des Werkzeuges aufgrund Unebenheiten im Boden nicht auf einer Ebene auf, sondern sind sie zueinander verworfen, entstehen Schwierigkeiten beim Überführen des Werkzeuges. Das Werkzeug ist beispielsweise anzuheben, wobei hohe Kräfte erforderlich sind.

Der Erfindung liegt die Aufgabe zugrunde, eine Vorrichtung der eingangs genannten Gattung aufzuzeigen, mit der die Aufnahme und die Übergabe eines Werkzeuges zu einer technischen Einrichtung erleichtert ist.

Diese Aufgabe ist erfindungsgemäß dadurch gelöst, daß das Fahrgestell als Profilkonstruktion ausgebildet ist und wenigstens ein etwa parallel zum Erdboden ausgerichtetes, frei vorstehendes Profil aufweist, an dessen freien Ende wenigstens ein Rad angeordnet ist, wobei das frei vorstehende Profil von unten gegen die technische Einrichtung führbar ist und mit dieser Einrichtung in Anlage bringbar ist, die Profilkonstruktion das Werkzeugaufnahmeelement trägt und zwischen dem frei vorstehenden Profil und dem Werkzeugaufnahmeelement ein definierter Abstand ausgebildet ist.

Auch die erfindungsgemäße Vorrichtung weist ein Fahrgestell auf. Dieses Fahrgestell hat wenigstens drei Räder, so daß die erfindungsgemäße Vorrichtung beispielsweise durch eine Halle verfahren werden kann.

Es ist vorgesehen, daß wie bei einem Hubwagen wenigstens ein Rad an dem Fahrgestell höhenveränderbar bzw. höhenverstellbar aufgenommen bzw. gehalten ist. Dadurch kann die Zuordnung der Vorrichtung zu der technischen Einrichtung in der Weise geändert werden, daß nach dem Heranfahren der erfindungsgemäßen Vorrichtung an die technische Einrichtung durch verschieden weites Herausfahren des wenigstens einen höhenveränderbar aufgenommenen Rades eine Korrektur der Ausrichtung der erfindungsgemäßen Vorrichtung zu der technischen Einrichtung erfolgt. So ist beispielsweise ermöglicht, bei einer vorhandenen Schieflage der technischen Einrichtung die Vorrichtung zum Aufnehmen des Werkzeuges gleichfalls in diese Schieflage zu bringen, wobei vorteilhaft erreicht ist, daß eine lagegleiche Zuordnung zwischen Vorrichtung zum Aufnehmen des Werkzeuges und technischer Einrichtung hergestellt ist, bei der das Werkzeug z. B. in einer Ebene auf die Vorrichtung übergestellt werden kann.

Die erfindungsgemäße Vorrichtung ist somit dazu geeignet, sich an die konkret vorliegende Anordnung einer technischen Einrichtung anzupassen. Das Überführen eines Werkzeuges über eine Schieflage oder über eine Höhendifferenz hinweg ist vorteilhaft aufgehoben. Das Überführen ist dadurch sehr erleichtert.

Damit die erfindungsgemäße Vorrichtung einen sicheren Stand aufweist, sind am Fahrgestell zumindestens drei Räder angeordnet, wobei vorzugsweise sämtliche Räder am Fahrgestell höhenveränderbar aufgenommen sind. Durch die höhenveränderbare Aufnahme sämtlicher Räder ist eine Veränderbarkeit der Anordnung der erfindungsgemäßen Vorrichtung in zwei Freiheitsgraden ermöglicht.

Nach der Erfindung ist vorgesehen, daß das Fahrgestell als Profilkonstruktion ausgebildet ist und wenigstens ein etwa parallel zum Erdboden ausgerichtetes Profil in frei vorstehender Anordnung aufweist, an dessen freien Ende wenigstens ein Rad angeordnet ist. Durch eine Profilkonstruktion ist eine einfache und preiswerte Ausbildung der erfindungsgemäßen Vorrichtung ermöglicht. Werden die verwendeten Profile ausreichend dimensioniert, weist die Vorrichtung auch die mechanische Festigkeit auf, um mehrere 100 kg schwere Werkzeuge aufnehmen und transportieren zu können.

Das Fahrgestell weist wenigstens ein frei vorstehendes Profil auf. Dieses Profil ist dazu geeignet, unterhalb eines Abschnittes der Einrichtung zum Versiegeln der Behälter verfahren zu werden. Am freien Ende dieses Profils ist ein Rad angeordnet, das am Fahrgestell höhenveränderbar aufgenommen ist. Wird seine Höhenanordnung am Fahrgestell geändert, kann die Höhe des Profils über dem Erdboden verändert werden. Diese Höhe ist insbesondere vergrößerbar, wodurch erreichbar ist, daß das Profil von unten gegen die Einrichtung zum Versiegeln der Behälter geführt wird und mit dieser Einrichtung in Anlage gebracht wird.

Durch diese Anlage ist vorteilhaft erreichbar, daß die Einrichtung zum Versiegeln der Behälter als Lehre für die Ausrichtung der erfindungsgemäßen Vorrichtung dient. Die erfindungsgemäße Vorrichtung ist an die Einrichtung am besten dadurch anpaßbar, daß sie an die Einrichtung eng angelegt wird. Durch das unterhalb der Einrichtung vorstehende Profil wird dabei vorzugsweise zunächst eine Anpassung an die Höhe der Einrichtung zum Versiegeln der Behälter über dem Erdboden gewonnen.

Vorzugsweise weist das Fahrgestell etwa zwei parallel zueinander frei vorstehende Profile auf, an deren freien Enden jeweils ein Rad angeordnet ist. Beide Profile werden unter die Einrichtung zum Versiegeln der Behälter geschoben und gegen deren Unterseite durch Höhenveränderung der Aufnahme der Räder am Fahrgestell geführt. Dadurch erfolgt eine Anlage des Fahrgestells in zwei Punkten an die Einrichtung zum Versiegeln der Behälter, so daß eine exakte Ausrichtung des vorderen Abschnittes des Fahrgestells an diese Einrichtung ermöglicht ist.

Jedes an einem frei vorstehenden Profil angeordnete Rad ist dabei vorzugsweise in einer Schwenkmechanik gelagert, die von einem in einem Arbeitszylinder geführten Kolben beaufschlagt ist. Bei der erfindungsgemäßen Vorrichtung erfolgt somit eine mechanische Veränderung der Höhenanordnung der Räder am Fahrgestell. Für die an den frei vorstehenden Profilen angeordneten Räder ist dabei jeweils eine schmal bauende Schwenkmechanik vorgesehen, welche die Achse eines Rades trägt. Diese Schwenkmechanik ist verschwenkbar, wobei die Schwenkbewegung von einer Kolbenzylinderanordnung ausgeführt wird. Eine manuelle Verstellung der Höhenanordnung der Räder ist somit vorteilhaft nicht erforderlich.

Um die Bauhöhe des frei vorstehenden Profils nicht zu vergrößern und seine Unterfahrmöglichkeit unter die Einrichtung zum Versiegeln der Behälter nicht zu behindern, sieht eine Weiterbildung der Erfindung vor, daß zwischen der Schwenkmechanik und dem Kolben ein Abstand ausgebildet ist, in welchem im Verlauf des Profils eine Schubstange angeordnet ist. Die Schubstange ist mit dem Kolben der Kolbenzylinderanordnung verbunden, so daß die Bewegungen des Kolbens über die Schubstange auf die Schwenkmechanik übertragen wird. Dabei ist die Schubstange im Verlauf des Profils angeordnet, wobei diese Anordnung sehr kompakt ausgebildet sein kann.

Eine nächste Weiterbildung der Erfindung sieht vor, daß das Fahrgestell wenigstens ein weiteres Rad aufweist, das am freien Ende eines Kolbens angeordnet ist, der in einem am Fahrgestell gehaltenen Arbeitszylinder geführt ist. Dieses wenigstens eine weitere Rad, vorzugsweise wenigstens zwei weitere Räder, ist in einem Bereich des Fahrgestells angeordnet, der nicht unterhalb der technischen Einrichtung verfahren wird. Eine raumsparende Anordnung der Höhenverstellbarkeit der Räder ist deshalb nicht erforderlich, hier kann zur technisch einfachen Ausbildung auf Kolbenzylinderanordnungen zurückgegriffen werden, wobei die Arbeitszylinder im Fahrgestell gehalten sind. Die Arbeitszylinder sind dabei beispielsweise etwa vertikal ausgerichtet, so daß die Kolben in vertikaler Richtung lageveränderbar sind. Dadurch können die an den freien Enden der Kolben angeordneten Räder verschieden weit aus den Arbeitszylindern ausgefahren werden.

Die erfindungsgemäße Vorrichtung wird vorzugsweise in der Weise an die Ausrichtung einer technischen Einrichtung angepaßt, daß zunächst ein Unterfahren der technischen Einrichtung durch das wenigstens eine frei vorstehende Profil erfolgt. Ist dieses Profil unterhalb der technischen Einrichtung angeordnet, wird das an diesen Profil angeordnete Rad in seiner Höhenanordnung am Fahrgestell derart verändert, daß das Profil von unten gegen eine Anlagefläche an der technischen Einrichtung geführt ist. Nachfolgend kann dann das wenigstens eine noch am Fahrgestell angeordnete weitere Rad in seiner Höhenanordnung am Fahrgestell so verändert werden, daß eine Lageanpassung der erfindungsgemäßen Vorrichtung an die technische Einrichtung eintritt. Die Anpassung der Ausrichtung der erfindungsgemäßen Vorrichtung an die Ausrichtung der technischen Einrichtung erfolgt somit vorzugsweise in zwei Schritten.

Die erfindungsgemäße Vorrichtung wird somit mit ihrer Profilkonstruktion exakt an eine Einrichtung zum Versiegeln der Behälter oder an eine andere technische Einrichtung angelegt. Ist zwischen den frei vorstehenden Profilen und dem Funktionsteilaufnahmeelement der erfindungsgemäßen Vorrichtung ein definierter Abstand ausgebildet» so kann durch diese enge Anlage das Funktionsteilaufnahmeelement in einer bestimmten Höhe über dem Erdboden angeordnet werden. Diese Höhe ist vorzugsweise an die Ausbildung der technischen Einrichtung angepaßt, an welche die erfindungsgemäße Vorrichtung angelegt wird. Dabei kann noch vorgesehen sein, daß das Funktionsteilaufnahmeelement in verschiedenen Höhen an der erfindungsgemäßen Vorrichtung anzuordnen ist, um mit ein und derselben erfindungsgemäßen Vorrichtung die Werkzeuge voneinander verschiedener technischer Einrichtungen abnehmen zu können.

Jeder Arbeitszylinder kann ein Hydraulikzylinder sein. Zur weiteren Ausbildung der Erfindung ist vorgesehen, daß jeder Arbeitszylinder ein Pneumatikzylinder ist, zu dem zumindestens eine Luftdruckleitung verläuft, welche am dem Arbeitszylinder abgekehrten Ende ein Anschlußmittel zum Anschließen an eine Luftdruckversorgung hat. Die Kolbenzylinderanordnungen werden somit mit Druckluft beaufschlagt. Druckluft hat den Vorteil, daß sie fettfrei und sauber eingesetzt werden kann. Die erfindungsgemäße Vorrichtung ist dadurch im lebensmittelverarbeitenden Gewerbe verwendbar, in der gerade Einrichtungen zum Versiegeln von Behältern eingesetzt werden. Derartige Einrichtungen sind regelmäßig bereits an eine Luftdruckversorgung angeschlossen und weisen zudem noch eine Anschlußmöglichkeit für ein Anschlußmittel einer Luftdruckleitung auf. Die erfindungsgemäße Vorrichtung kann somit einer derartigen Einrichtung angenähert werden und für die Höhenverstellung der Räder mit der Druckluftleitung der Arbeitszylinder an die Einrichtung angeschlossen werden.

In anderen Bereichen z. B. in einer Halle können Luftdruckanschlüsse vorhanden sein, an welche die Luftdruckleitung der Arbeitszylinder der erfindungsgemäßen

Vorrichtung anschließbar ist. So kann beispielsweise eine Regalanordnung vorgesehen sein, in der nicht benötigte Werkzeuge abgelegt werden. Mit der erfindungemäßen Vorrichtung kann ein Werkzeug zu dieser Regalanordnung verfahren werden. Nachdem die erfindungsgemäße Vorrichtung dort an eine Luftdruckversorgung angeschlossen ist kann das Werkzeug mit Hilfe der Vorrichtung in der Regalanordnung abgelegt werden. Das wenigstens eine frei vorstehende Profil wird dazu beispielsweise durch eine Höhenverstellung gegen einen Regalboden verfahren, so daß auch eine Anpassung der erfindungsgemäßen Vorrichtung an eine Regalanordnung ermöglicht ist.

Ein Ausführungsbeispiel der Erfindung, aus dem sich weitere erfinderische Merkmale ergeben, ist in der Zeichnung dargestellt. Es zeigen:

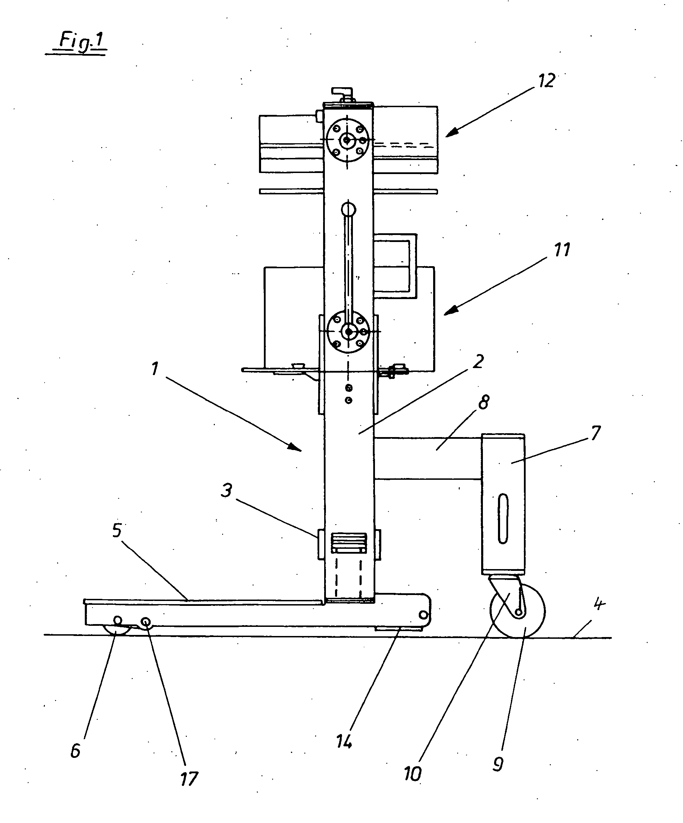

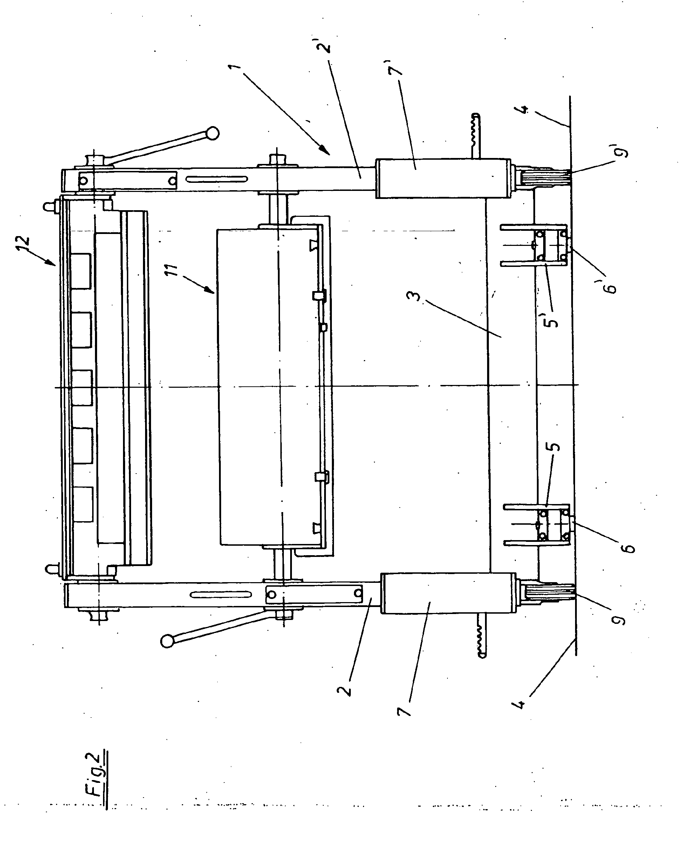

- Fig. 1 bis 3:: Seitenansichten einer erfindungsgemäßen Vorrichtung zum Aufnehmen und/oder Transportieren wenigstens eines Funktionsteils und
- Fig. 4:: eine Draufsicht eines Bauteils der Vorrichtung gemäß Fig. 1 bis 3.

Die erfindungsgemäße Vorrichtung weist ein als Profilkonstruktion 1 ausgebildetes Fahrgestell auf. Durch zwei vertikal ausgerichtete Profile 2, 2' und ein die unteren Enden der Profile 2, 2' verbindendes, horizontal ausgerichtetes Profil 3 ist ein Gestell ausgebildet.

An dem Profil 3 sind zwei parallel zueinander frei vorstehende und parallel zum Erdboden 4 ausgerichtete Profile 5, 5' angeordnet. Am freien Ende der Profile 5, 5' sind-Räder 6, 6' angeordnet. Mit diesen Rädern 6, 6' steht die Profilkonstrüktion 1 auf dem Erdboden 4 auf.

Die Profilkonstruktion 1 weist zwei weitere Profile 7, 7' auf, die parallel zu den Profilen 2, 2' angeordnet sind und mit diesen jeweils über ein parallel zu den Profilen 5 verlaufendes Verbindungsprofil 8 verbunden sind. An den unteren freien Enden der Profile 7, 7' sind weitere Räder 9, 9' angeordnet, die auch auf dem Erdboden 4 aufstehen. Diese Räder 9, 9' sind dabei in Drehaufnahmen 10 aufgenommen, wobei diese Drehaufnahmen 10 um eine etwa vertikal verlaufende Drehachse drehbar sind.

Die Profilkonstruktion 1 trägt zwei Werkzeugaufnahmen 11, 12 für Werkzeuge einer Einrichtung zum Versiegeln von Behältern. Die Höhenanordnung der Werkzeugaufnahme 11 über dem Erdboden 4 ist veränderbar.

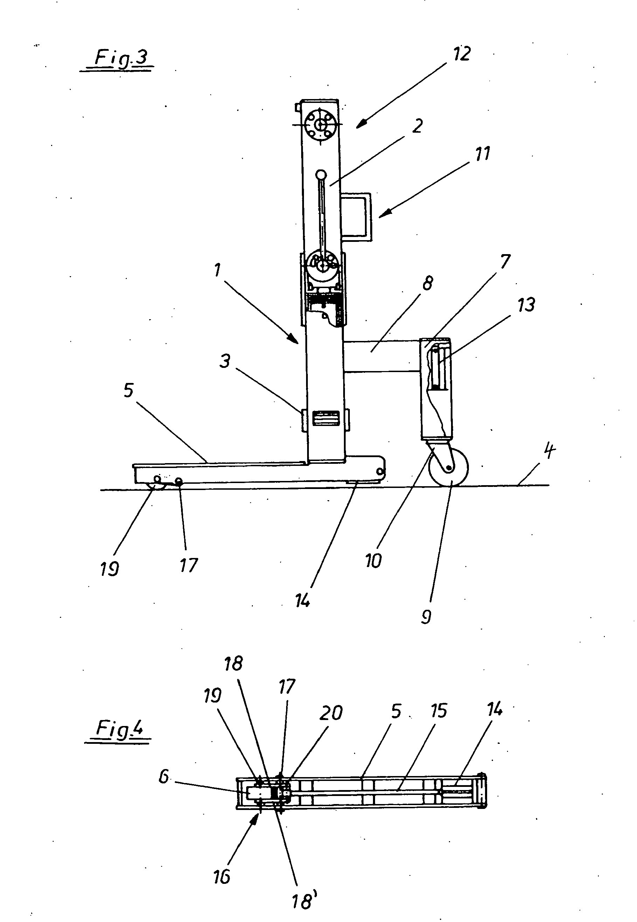

Fig. 3 zeigt, daß in den Profilen 7, 7' jeweils ein Arbeitszylinder 13 in vertikaler Ausrichtung angeordnet ist. In jedem Arbeitszylinder 13, der vorzugsweise als Pneumatikzylinder ausgebildet ist, ist ein Kolben angeordnet, an dessem freien Ende das Rad 9 über die Drehaufnahme 10 angeordnet ist.

Auch für die Räder 6, 6' sind Arbeitszylinder 14 vorgesehen, welche in horizontaler Ausrichtung innerhalb der Profile 5, 5' angeordnet sind. Fig. 4 zeigt, daß der Kolben des Arbeitszylinders 14 auf eine Schubstange 15 wirkt, welche eine Schwenkmechanik 16 beaufschlagt, die das Rad 6 trägt. Die Schwenkmechanik 16 umfaßt zwei auf einer Achse 17 gelagerte Wangen 18, 18'. An den freien Enden der Wangen 18, 18' sind eine Achse 19 für das Rad 6 sowie eine Achse 20 für die Schubstange 15 gehalten.

## Patentansprüche

1. Vorrichtung zum Aufnehmen und/oder Transportieren wenigstens eines Werkzeuges einer technischen Einrichtung, insbesondere einer Einrichtung zum automatischen Versiegeln von Behältern, umfassend zumindest ein Werkzeugaufnahmeelement und umfassend wenigstens ein Fahrgestell, welches Räder aufweist und das Werkzeugaufnahmeelement trägt, wobei mindestens ein Rad am Fahrgestell höhenveränderbar aufgenommen ist,
**dadurch gekennzeichnet,**
**daß** das Fahrgestell als Profilkonstruktion (1) ausgebildet ist und wenigstens ein etwa parallel zum Erdboden (4) ausgerichtetes, frei vorstehendes Profil (5, 5') aufweist, an dessen freien Ende wenigstens ein Rad (6, 6') angeordnet ist, wobei das frei vorstehende Profil von unten gegen die technische Einrichtung führbar ist und mit dieser Einrichtung in Anlage bringbar ist, die Profilkonstruktion (1) das Werkzeugaufnahmeelement (11, 12) trägt und zwischen dem frei vorstehenden Profil (5,5') und dem Werkzeugaufnahmeelement (11,12) ein definierter Abstand ausgebildet ist.

2. Vorrichtung nach Anspruch 1, **dadurch gekennzeichnet, daß** das Fahrgestell zumindestens drei Räder (6, 6', 9, 9') aufweist und daß sämtliche Räder (6, 6', 9, 9') am Fahrgestell höhenveränderbar aufgenommen sind.

3. Vorrichtung nach Anspruch 1 oder 2, **dadurch gekennzeichnet, daß** die Profilkonstruktion (1) zwei etwa parallel zueinander frei vorstehende Profile (5, 5') hat, an deren freien Enden jeweils ein Rad (6, 6') angeordnet ist.

4. Vorrichtung nach Anspruch 3, **dadurch gekennzeichnet, daß** das am Profil (5, 5') angeordnete Rad (6, 6') in einer Schwenkmechanik (16) gelagert ist, die von einem in einem Arbeitszylinder (14) geführten Kolben beaufschlagt ist.

5. Vorrichtung nach Anspruch 4, **dadurch gekennzeichnet, daß** zwischen der Schwenkmechanik (16) und dem Kolben ein Abstand ausgebildet ist, in welchem im Verlauf des Profils (5, 5') eine Schubstange (15) angeordnet ist.

6. Vorrichtung nach einem der vorhergehenden Ansprüche, **dadurch gekennzeichnet, daß** die Profilkonstruktion (1) wenigstens ein weiteres Rad (9, 9') aufweist, das am freien Ende eines Kolbens angeordnet ist, der in einem an der Profilkonstruktion (1) gehaltenen Arbeitszylinder (13) geführt ist.

7. Vorrichtung nach einem der Ansprüche 4 bis 6, **dadurch gekennzeichnet, daß** jeder Arbeitszylinder (13, 14) ein Pneumatikzylinder ist, zu dem zumindestens eine Luftdruckleitung verläuft, welche am dem Arbeitszylinder (13, 14) abgekehrten Ende ein Anschlußmittel zum Anschließen an eine Luftdruckversorgung hat.

## Claims

1. A device for accommodating and/or transporting at least one tool of a technical plant, in particular a plant for automatically sealing containers, comprising at least one tool accommodating element and comprising at least one chassis, which encompasses wheels and which supports tool accommodating elements, wherein at least one wheel is accommodated at the chassis so as to be height-adjustable,
**characterized in**
**that** the chassis is embodied as profile construction (1) and encompasses at least one freely projecting profile (5, 5'), which is oriented so as to be approximately parallel to the ground (4), at the free end of which at least one wheel (6, 6') is arranged, wherein the freely projecting profile can be guided against the technical plant from below and can be moved up against said plant, the profile construction (1) supports the tool accommodating element (11, 12) and a defined distance is embodied between the freely projecting profile (5, 5') and the tool accommodating element (11, 12).

2. The device according to claim 1, **characterized in that** the chassis encompasses at least three wheels (6, 6', 9, 9') and that all of the wheels (6, 6', 9, 9') are accommodated at the chassis so as to be height-adjustable.

3. The device according to claim 1 or 2, **characterized in that** the profile construction (1) has two freely projecting profiles (5, 5'), which are approximately parallel to one another, at the free ends of which a wheel (6, 6') is arranged in each case.

4. The device according to claim 3, **characterized in that** the wheel (6, 6') arranged at the profile (5, 5') is supported in a swivel mechanism (16), which is acted upon by a piston, which is guided in a working cylinder (14).

5. The device according to claim 4, **characterized in that** a distance, in which a connecting rod (15) is arranged in the course of the profile (5, 5'), is formed between the swivel mechanism (16) and the piston.

6. The device according to one of the preceding claims, **characterized in that** the profile construction (1) encompasses at least one further wheel (9, 9'), which is arranged at the free end of a piston, which is guided in a working cylinder (13), which is mounted on the profile construction (1).

7. The device according to one of claims 4 to 6, **characterized in that** each working cylinder (13, 14) is a pneumatic cylinder, to which at least one air pressure line runs, said air pressure line having a connecting element at end facing away from the working cylinder (13, 14) for being connected to an air pressure supply.

## Revendications

1. Dispositif pour loger et/ou transporter au moins un outil d'un dispositif technique, notamment d'un dispositif de scellement automatique de récipients, comprenant au moins un élément de logement d'outil et comprenant au moins un châssis, lequel présente des roues et supporte l'élément de logement d'outil, dans lequel au moins une roue est positionnée sur le châssis de manière variable en hauteur,
**caractérisé en ce que**
le châssis est configuré comme une construction de profilé (1) et présente au moins un profilé dépassant à découvert (5,5'), aligné approximativement à la parallèle du sol (4), à l'extrémité libre duquel au moins une roue (6,6') est disposée, dans lequel le profilé dépassant à découvert peut être guidé par-dessous contre le dispositif technique et peut venir s'appuyer contre ce dispositif, la construction de profilé (1) supporte l'élément de logement d'outil (11,12) et un espacement défini est réalisé entre le profilé dépassant à découvert (5,5') et l'élément de logement d'outil (11,12).

2. Dispositif selon la revendication 1, **caractérisé en ce que** le châssis présente au moins trois roues (6, 6',9,'9') et toutes les roues (6, 6',9,'9') sont positionnées sur le châssis de manière variable en hauteur.

3. Dispositif selon la revendication 1 ou 2, **caractérisé en ce que** la construction de profilé (1) comporte deux profilés (5,5') dépassant à découvert approximativement parallèles l'un à l'autre, aux extrémités libres desquels une roue (6,6') est respectivement disposée.

4. Dispositif selon la revendication 3, **caractérisé en ce que** la roue (6,6') disposée sur le profilé (5,5') est placée dans un mécanisme de basculement (16), qui est sollicité par un piston guidé dans un vérin (14).

5. Dispositif selon la revendication 4, **caractérisé en ce que** entre le mécanisme de basculement (16) et le piston, un espacement est réalisé, dans lequel une tige de poussée (15) est disposée dans le cours du profilé (5,5').

6. Dispositif selon une des revendications précédentes, **caractérisé en ce que** la construction de profilé (1) présente au moins une roue supplémentaire (9,9'), qui est disposée à l'extrémité libre d'un piston, qui est guidé dans un vérin (13) fixé sur la construction de profilé (1).

7. Dispositif selon une des revendications 4 à 6, **caractérisé en ce que** chaque vérin (13,14) est un vérin pneumatique, vers lequel au moins une conduite d'air pressurisé s'étend, laquelle possède à l'extrémité opposée au vérin (13,14) un moyen de raccord pour le raccordement à une alimentation en air pressurisé.
